# EUROPEAN PATENT APPLICATION

(11) **EP 3 343 384 A1**
(43) Date of publication of application: **04.07.2018**
(21) Application number: 16382676.1
(22) Date of filing: 30.12.2016
(51) Int. Cl.: G06F 13/28

(54) **DATA OPERATIONS PERFORMED BETWEEN COMPUTING NODES USING DIRECT MEMORY ACCESS (DMA)**

(71) Applicant: Intel IP Corporation, Santa Clara, CA 95054 (US)
(72) Inventor: GUIM BERNAT, Francesc, 08036 Barcelona (ES); DOSHI, Kshitij A., Tempe, AZ Arizona AZ 85282 (US); RIVAS BARRAGAN, Daniel, DE 50823 Cologne (DE); MORA PORTA, Gaspar, CA, 95054 Santa Clara (US)
(74) Representative: Maiwald Patent- und Rechtsanwaltsgesellschaft mbH

(57) **Abstract**

Technology for a computing node operable to perform data operations between multiple computing nodes is described. The computing node can include a data mapping engine (DME) configured to generate data transformation and mapping information for a defined data operation received from a processor in the computing node. The computing node can include a direct memory access (DMA) controller configured to initiate the defined data operation between the multiple computing nodes. The defined data operation can include: manipulating data stored in one or more source memory locations in accordance with the data transformation and mapping information, and providing manipulated data for storage in one or more target memory locations.

## Description

### BACKGROUND

Data centers are facilities that house a plurality of computing nodes. For example, a typical data center can include hundreds or thousands of computing nodes. The computing nodes can include processing capabilities to perform computing and memory for data storage. Data centers can include network switches and/or routers to enable communication between different computing nodes in the data center. Data centers can employ redundant or backup power supplies, redundant data communications connections, environmental controls (e.g., air conditioning, fire suppression) and various security devices.

Data centers can employ various types of memory, such as volatile memory or non-volatile memory. Non-limiting examples of volatile-memory include dynamic random access memory (DRAM) and synchronous dynamic random access memory (SDRAM). Non-limiting examples of non-volatile memory include flash memory and solid-state storage.

### BRIEF DESCRIPTION OF THE DRAWINGS

Features and advantages of invention embodiments will be apparent from the detailed description which follows, taken in conjunction with the accompanying drawings, which together illustrate, by way of example, invention features; and, wherein:
FIG. 1 illustrates a computing node that supports direct memory access (DMA) in accordance with an example embodiment;
FIG. 2 illustrates a data center with memory and storage disaggregation in accordance with an example embodiment;
FIG. 3 illustrates a data mapping engine (DME) coupled to a direct memory access (DMA) engine in accordance with an example embodiment;
FIG. 4 illustrates a scatter with filter operation performed using a DME coupled to a DMA engine in accordance with an example embodiment;
FIG. 5 illustrates a gather operation performed using a DME coupled to a DMA engine in accordance with an example embodiment;
FIG. 6 illustrates an operation being performed across multiple computing nodes in accordance with an example embodiment;
FIG. 7 illustrates messaging to register a shared address space in accordance with an example embodiment;
FIG. 8 illustrates messaging to perform an operation across multiple computing nodes in accordance with an example embodiment;
FIG. 9 is a diagram of a computing node in accordance with an example embodiment;
FIG. 10 is a diagram of a first computing node in accordance with an example embodiment;
FIG. 11 depicts a flowchart of a method for performing data operations between multiple computing nodes in accordance with an example embodiment; and
FIG. 12 illustrates a computing system that includes a data storage device in accordance with an example embodiment.

Reference will now be made to the exemplary embodiments illustrated, and specific language will be used herein to describe the same. It will nevertheless be understood that no limitation on invention scope is thereby intended.

### DESCRIPTION OF EMBODIMENTS

Before the disclosed invention embodiments are described, it is to be understood that this disclosure is not limited to the particular structures, process steps, or materials disclosed herein, but is extended to equivalents thereof as would be recognized by those ordinarily skilled in the relevant arts. It should also be understood that terminology employed herein is used for the purpose of describing particular examples or embodiments only and is not intended to be limiting. The same reference numerals in different drawings represent the same element. Numbers provided in flow charts and processes are provided for clarity in illustrating steps and operations and do not necessarily indicate a particular order or sequence.

Furthermore, the described features, structures, or characteristics can be combined in any suitable manner in one or more embodiments. In the following description, numerous specific details are provided, such as examples of layouts, distances, network examples, etc., to provide a thorough understanding of various invention embodiments. One skilled in the relevant art will recognize, however, that such detailed embodiments do not limit the overall inventive concepts articulated herein, but are merely representative thereof.

As used in this specification and the appended claims, the singular forms "a," "an" and "the" include plural referents unless the context clearly dictates otherwise. Thus, for example, reference to "a bit line" includes a plurality of such bit lines.

Reference throughout this specification to "an example" means that a particular feature, structure, or characteristic described in connection with the example is included in at least one embodiment of the present invention. Thus, appearances of the phrases "in an example" or "an embodiment" in various places throughout this specification are not necessarily all referring to the same embodiment.

As used herein, a plurality of items, structural elements, compositional elements, and/or materials can be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention can be referred to herein along with alternatives for the various components thereof. It is understood that such embodiments, examples, and alternatives are not to be construed as de facto equivalents of one another, but are to be considered as separate and autonomous representations under the present disclosure.

Furthermore, the described features, structures, or characteristics can be combined in any suitable manner in one or more embodiments. In the following description, numerous specific details are provided, such as examples of layouts, distances, network examples, etc., to provide a thorough understanding of invention embodiments. One skilled in the relevant art will recognize, however, that the technology can be practiced without one or more of the specific details, or with other methods, components, layouts, etc. In other instances, well-known structures, materials, or operations may not be shown or described in detail to avoid obscuring aspects of the disclosure.

In this disclosure, "comprises," "comprising," "containing" and "having" and the like can have the meaning ascribed to them in U.S. Patent law and can mean "includes," "including," and the like, and are generally interpreted to be open ended terms. The terms "consisting of" or "consists of" are closed terms, and include only the components, structures, steps, or the like specifically listed in conjunction with such terms, as well as that which is in accordance with U.S. Patent law. "Consisting essentially of" or "consists essentially of" have the meaning generally ascribed to them by U.S. Patent law. In particular, such terms are generally closed terms, with the exception of allowing inclusion of additional items, materials, components, steps, or elements, that do not materially affect the basic and novel characteristics or function of the item(s) used in connection therewith. For example, trace elements present in a composition, but not affecting the compositions nature or characteristics would be permissible if present under the "consisting essentially of" language, even though not expressly recited in a list of items following such terminology. When using an open-ended term in this specification, like "comprising" or "including," it is understood that direct support should be afforded also to "consisting essentially of" language as well as "consisting of" language as if stated explicitly and vice versa.

The terms "first," "second," "third," "fourth," and the like in the description and in the claims, if any, are used for distinguishing between similar elements and not necessarily for describing a particular sequential or chronological order. It is to be understood that any terms so used are interchangeable under appropriate circumstances such that the embodiments described herein are, for example, capable of operation in sequences other than those illustrated or otherwise described herein. Similarly, if a method is described herein as comprising a series of steps, the order of such steps as presented herein is not necessarily the only order in which such steps may be performed, and certain of the stated steps may possibly be omitted and/or certain other steps not described herein may possibly be added to the method.

As used herein, comparative terms such as "increased," "decreased," "better," "worse," "higher," "lower," "enhanced," and the like refer to a property of a device, component, or activity that is measurably different from other devices, components, or activities in a surrounding or adjacent area, in a single device or in multiple comparable devices, in a group or class, in multiple groups or classes, or as compared to the known state of the art. For example, a data region that has an "increased" risk of corruption can refer to a region of a memory device which is more likely to have write errors to it than other regions in the same memory device. A number of factors can cause such increased risk, including location, fabrication process, number of program pulses applied to the region, etc.

As used herein, the term "substantially" refers to the complete or nearly complete extent or degree of an action, characteristic, property, state, structure, item, or result. For example, an object that is "substantially" enclosed would mean that the object is either completely enclosed or nearly completely enclosed. The exact allowable degree of deviation from absolute completeness may in some cases depend on the specific context. However, generally speaking the nearness of completion will be so as to have the same overall result as if absolute and total completion were obtained. The use of "substantially" is equally applicable when used in a negative connotation to refer to the complete or near complete lack of an action, characteristic, property, state, structure, item, or result. For example, a composition that is "substantially free of" particles would either completely lack particles, or so nearly completely lack particles that the effect would be the same as if it completely lacked particles. In other words, a composition that is "substantially free of" an ingredient or element may still actually contain such item as long as there is no measurable effect thereof.

As used herein, the term "about" is used to provide flexibility to a numerical range endpoint by providing that a given value may be "a little above" or "a little below" the endpoint. However, it is to be understood that even when the term "about" is used in the present specification in connection with a specific numerical value, that support for the exact numerical value recited apart from the "about" terminology is also provided.

Numerical amounts and data may be expressed or presented herein in a range format. It is to be understood that such a range format is used merely for convenience and brevity and thus should be interpreted flexibly to include not only the numerical values explicitly recited as the limits of the range, but also to include all the individual numerical values or sub-ranges encompassed within that range as if each numerical value and sub-range is explicitly recited. As an illustration, a numerical range of "about 1 to about 5" should be interpreted to include not only the explicitly recited values of about 1 to about 5, but also include individual values and sub-ranges within the indicated range. Thus, included in this numerical range are individual values such as 2, 3, and 4 and sub-ranges such as from 1-3, from 2-4, and from 3-5, etc., as well as 1, 1.5, 2, 2.3, 3, 3.8, 4, 4.6, 5, and 5.1 individually.

This same principle applies to ranges reciting only one numerical value as a minimum or a maximum. Furthermore, such an interpretation should apply regardless of the breadth of the range or the characteristics being described.

An initial overview of technology embodiments is provided below and then specific technology embodiments are described in further detail later. This initial summary is intended to aid readers in understanding the technology more quickly, but is not intended to identify key or essential technological features nor is it intended to limit the scope of the claimed subject matter. Unless defined otherwise, all technical and scientific terms used herein have the same meaning as commonly understood by one of ordinary skill in the art to which this disclosure belongs.

Direct memory access (DMA) is a technique that allows an input/output (I/O) device to bypass a central processing unit (CPU), and to send or receive data directly to or from a system memory, thus speeding up memory operations. Since DMA allows the CPU to be bypassed when sending or receiving data to or from the system memory, the CPU can be available to perform other operations. Without DMA, when the CPU is using programmed I/O, the CPU is typically occupied for the entire duration of a read or write operation, and is thus unavailable to perform other work. With DMA, the CPU can, for example, initiate a data transfer, and then perform other operations while the data transfer is in progress. The CPU can receive an interrupt from a DMA controller when the data transfer is finished.

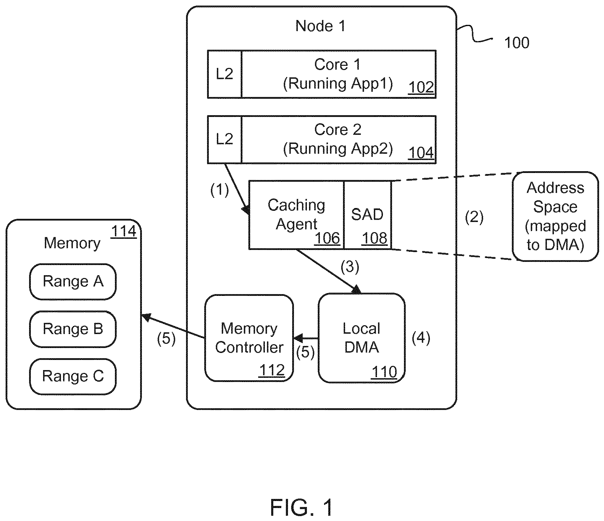

FIG. 1 illustrates an exemplary computing node 100 (node 1) that supports DMA. The computing node 100 can include a first core 102 (core 1) that runs a first application (Appl), and the computing node 100 can include a second core 104 (core 2) that runs a second application (App2). The first and second cores 102, 104 can also be referred to as first and second processors. The first core 102 and the second core 104 can each include a level 2 (L2) cache. The computing node 100 can include a caching agent 106, which can, in some examples, be configured as a coherency agent that processes data requests from the first and second cores 102, 104 in the computing node 100. The caching agent 106 can communicate with a system address decoder (SAD) 108, which can maintain an address space mapping for the computing node 100. The computing node 100 can also include a DMA engine (or local DMA 110), which can be in communication with a memory controller 112. In addition, the computing node 100 can be in communication with a memory store 114, which can include a plurality of memory ranges or locations (e.g., range A, range B and range C). Each memory range can refer to a range of memory addresses with stored data.

The memory store can include a memory with volatile memory, nonvolatile memory (NVM), or a combination thereof. Volatile memory is a storage medium that requires power to maintain the state of data stored by the medium. Exemplary memory can include any combination of random access memory (RAM), such as static random access memory (SRAM), dynamic random access memory (DRAM), synchronous dynamic random access memory (SDRAM), and the like. In some examples, DRAM complies with a standard promulgated by JEDEC, such as JESD79F for Double Data Rate (DDR) SDRAM, JESD79-2F for DDR2 SDRAM, JESD79-3F for DDR3 SDRAM, or JESD79-4A for DDR4 SDRAM (these standards are available at www.jedec.org).

NVM is a storage medium that does not require power to maintain the state of data stored by the medium. Non-limiting examples of NVM can include any or a combination of solid state memory (such as planar or three-dimensional (3D) NAND flash memory, NOR flash memory, or the like), cross point array memory, including 3D cross point memory, phase change memory (PCM), such as chalcogenide PCM, non-volatile dual in-line memory module (NVDIMM), byte addressable nonvolatile memory, ferroelectric memory, silicon-oxide-nitride-oxide-silicon (SONOS) memory, polymer memory (e.g., ferroelectric polymer memory), ferroelectric transistor random access memory (Fe-TRAM) ovonic memory, spin transfer torque (STT) memory, nanowire memory, electrically erasable programmable read-only memory (EEPROM), magnetic storage memory, magnetoresistive random-access memory (MRAM), write in place non-volatile MRAM (NVMRAM), and the like. In some examples, non-volatile memory can comply with one or more standards promulgated by the Joint Electron Device Engineering Council (JEDEC), such as JESD218, JESD219, JESD220-1, JESD223B, JESD223-1, or other suitable standard (the JEDEC standards cited herein are available at www.jedec.org).

As an operation example using the node 100 illustrated in FIG. 1, the second core 104 can be instructed to perform an operation. The operation can involve reading data stored in memory ranges A and B, and then writing data to memory range C. In this example, memory ranges A and B can be source memory locations, and memory range C can be a target memory location. A non-limiting example of an operation can be a 'memory copy' operation. The second core 104 can send the operation using memory-mapped I/O (MIMO) to the caching agent 106. The caching agent 106 can perform a lookup of the SAD 108 and map the operation to the DMA engine (or local DMA 110). The caching agent 106 can forward addresses for memory ranges A and B to the DMA engine (or local DMA 110), and the DMA engine (or local DMA 110) can determine the address ranges for the operation. The DMA engine (or local DMA 110) can read data in the memory ranges A and B, perform the operation, and then write data to the memory range C.

In the example shown in FIG. 1, the DMA approach is limited to only a single computing node (i.e., a local node), and cannot be leveraged across machine boundaries (or multiple computing nodes). For example, if a first computing node and a second computing node each include DMA engines, the DMA engines cannot be fused to automatically perform operations on data (e.g., aggregating, disaggregating, splitting, blending, or the like) that is distributed across the first computing node and the second computing node due to the local nature of the DMA engines. As scale-out computations become more popular with real-time in-memory processing, large scale machine analytics, and other applications of data-driven large scale enterprise, extending this DMA approach from "within computing nodes" to "across computing nodes" is desirable.

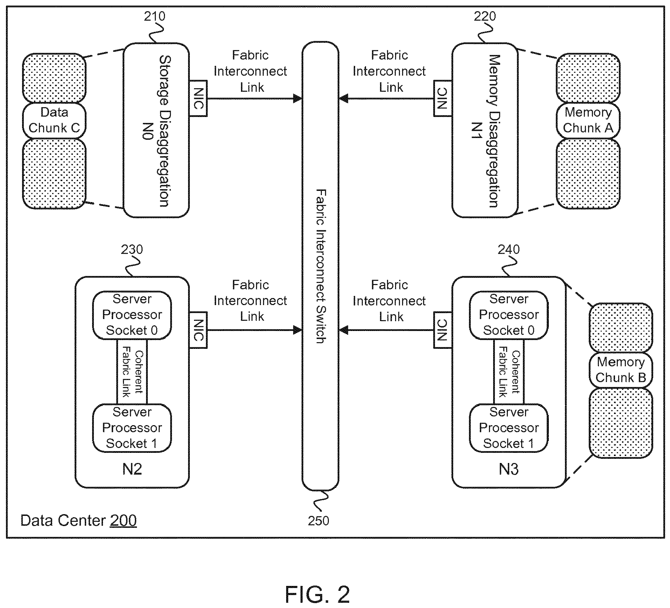

FIG. 2 illustrates a block diagram of a traditional data center 200 with memory and storage disaggregation. The traditional data center 200 can employ a scale-out system in which additional nodes can be added or removed. The traditional data center 200 can include a first computing node 210 (N0) with storage disaggregation, a second computing node 210 (N1) with memory disaggregation, a third computing node 220 (N2) and a fourth computing node 230 (N3). The first computing node 210 (N0), the second computing node 220 (N1), the third computing node 230 (N2) and the fourth computing node 240 (N3) can each include a network interface controller (NIC). The NICs can enable the first computing node 210 (N0), the second computing node 220 (N1), the third computing node 230 (N2) and the fourth computing node 240 (N3) to communicate with each other over a communication interface, such as, for example, a fabric interconnect switch 250. As one example, the NIC in the first computing node 210 (N0) can communicate with the NIC in the second computing node 220 (N1). In addition, each of the first computing node 210 (N0), the second computing node 220 (N1), the third computing node 230 (N2) and the fourth computing node 240 (N3) can be connected to the fabric interconnect switch 250 via fabric interconnect links that creates coherent fabric tunnels.

As shown in FIG. 2, the traditional data center 200 with scale-out system can utilize different types of nodes (with disaggregated resources for memory and storage). The different types of nodes can operate together, for example, in a machine learning, big data application, or the like. In one example of a big data application, the third computing node 230 (N2) and the fourth computing node 240 (N3) can exchange data, process the data, and then use the first computing node 210 (N0) with storage disaggregation for check pointing states. The scale-out system can run a machine learning algorithm during which a plurality of gather operations, scatter operations, join operations, extract operations, etc. are performed. While some transformations may utilize complex computations, a number of transformations are simpler geometric data movements and regular computations that do not utilize the full power of a CPU in the computing node. Examples of the geometric data movements can include Array of Structures (AoS) to Structure of Arrays (SoA) or vice versa, transpositions in two dimensions (2D) (or higher dimensions), etc. Examples of regular computations include sparse-to-dense, dense-to-sparse, etc.

In the example shown in FIG. 2 with respect to the traditional data center 200, when transformations are used between processing steps that occur in different computing nodes, the data can be transformed and then sent, or the data can be received and then transformed. As a result, these transformations can waste memory bandwidth and cache capacity, as well as unnecessarily using CPU instructions and CPU cycles.

In one example, the first computing node 210 (N0) with storage disaggregation can include memory in which a data chunk C can be stored. The second computing node 220 (N1) with memory disaggregation can include memory in which a memory chunk A can be stored. The third computing node 230 (N2) and the fourth computing node 240 (N3) can each include a first server processor socket (socket 0) that is connected to a second server processor socket (socket 1) via a coherent fabric link. In addition, the fourth computing node 240 (N3) can include memory in which memory chunk B can be stored.

In one example, an application in the third computing node 230 (N2) can be instructed to perform an operation with data chunk A stored in the second computing node 220 (N1) and data chunk B stored in the fourth computing node 240 (N3), and a result can be stored as data chunk C in the first computing node 210 (N0). In order to perform this operation using traditional techniques, the data chunks are transformed each time the data chunks are sent or received over the fabric interconnect switch 250, which can waste memory bandwidth and cache capacity, as well as unnecessary use of CPU instructions and CPU cycles.

In one example configuration of the present technology, a data mapping engine (DME) can work integrally with a DMA controller (or DMA engine) and a NIC to apply any of a number of preprogrammed or predetermined in-the-flow transforms and/or re-mappings to data while the data is being direct memory-accessed between source and target memory locations. The source and target memory locations can be within the same computing node or in different computing nodes. The DME can be utilized for inter-computing node data flows, so that data produced by one task in one computing node can be restructured "during the flow" in a prescribed manner into a different form, and/or derivative information can be extracted from the data during the flow. As such, a second task in a second computing node can receive data in a restructured form that corresponds to any specific requirements of the second task, thus streamlining operations by avoiding the need to perform such restructuring in the second computing node. In other words, the DME can perform any operation that can be offloaded from the second node for the second task, such that the data arrives at the second node in a form that is more readily usable by the task.

The DME, the DMA controller, and/or the NIC can be integrated within a given computing node. Using the DME, data from the source memory location can be manipulated, transformed, etc., before being sent to the target memory location. The DME can be useful for various operations, such as data layout transformations, generalized transpositions, mask generation, mask application when writing data, stream splitting and blending, etc., including combinations thereof. The integration of the DME with the DMA controller can provide a number of benefits when transferring data between the source and target memory locations. For example, the integration of the DME with the DMA controller can: avoid certain types of routine data manipulations at a processor or processors, save on cache pollution, reduce scatter/gather operations, transpositions, etc., which can make vector processing more efficient, reduce latency between processing tasks, and reduce the overall number of instructions. In addition, since the DME has the ability to perform these operations (e.g., copying, blending, filtering), they can be offloaded from the cores (or processors) in the computing nodes to the DME.

In one example of the present technology, the computing nodes can expose a shared memory address space, based on which the DMA controller can access and manipulate data from other computing nodes in the network. The data can be accessed and manipulated transparently with regards to where the data is physically located (i.e., which computing node in the network physically stores the data). For example, at boot time, each computing node in the system can expose a portion of its memory as shared memory address space, which is accessible to all computing nodes in the system through their NICs. As a result, the NIC in a given computing node can have a global view of the shared memory address space across the network.

In one example, a data operation that is directed to the shared memory address space can be identified as such using a SAD associated with a local caching agent (i.e., local to the processor requesting the data operation). For this purpose, the SAD can include a dynamic table with an entry for each computing node that is exposing part of its memory address space.

In one example, a data request for the data operation can be forwarded to the NIC of a computing node (e.g., a local NIC), which can determine the appropriate computing node for the target memory location being accessed. More specifically, a caching agent in the NIC can utilize an associated SAD to identify the computing node that owns the shared memory address space that is to be accessed. After the appropriate computing node for the target memory location being accessed is determined, the local NIC can initiate the performance of the operation by communicating with the remote NIC of the computing node for the target memory location being accessed.

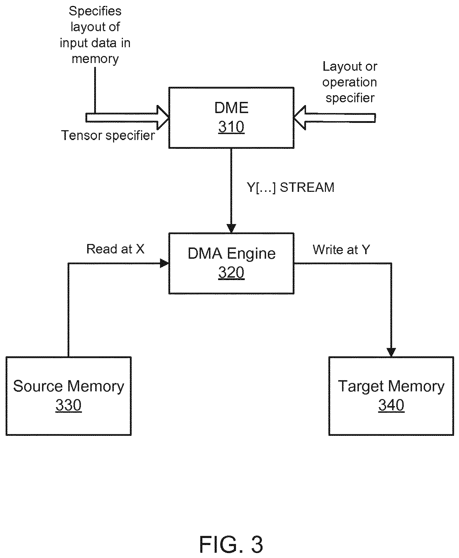

FIG. 3 illustrates an example of a DME 310 coupled to a DMA engine 320. The DME 310 and the DMA engine 320 can reside in a computing node (not shown). The DME 310 and the DMA engine 320 can be communicatively coupled to a NIC (not shown) in the computing node. The DME 310 can perform transformations on data (or structures) that the DMA engine 320 accesses from a source memory location 330. The source memory location 330 can be included in the computing node that contains the DME 310 and the DMA engine 320, or alternatively, the source memory location 330 can be included in a different computing node. The DME 310 can operate over the data, such that the DME 310 can create a new layout (e.g., bitmap or filter operations) and specify to the DMA engine 320 how the data is to be accessed and revectored when the data is written to a target memory location 340. The target memory location 340 can be included in the computing node that contains the DME 310 and the DMA engine 320, or alternatively, the target memory location 340 can be included in a different computing node. Therefore, in some cases the source memory location 330 and the target memory location 340 can be located in different computing nodes, while in other cases they can be located in the same computing node.

As an example, the DME 310 can compute new addresses to transpose data in an N-dimensional table. For example, T<u, v, w, x, ... > can be modified to a different order of traversal, such as T'<w, v, x, u ...>). Here, T can represent data, T' can represent transposed data, and u, v, w and x can represent data elements. The DMA engine 320 can cause data to be written to a specified destination, such as the target memory location 340, according to data and layout transformations provided by the DME 310. These transformations can involve straightforward address arithmetic, and can be assisted by a set of translations cached by the DME 310.

In one example, the DME 310 can receive a tensor specifier, which can specify a layout of input data in memory. The input data can be included in the source memory location 330. The tensor specifier can include both sparse and dense axes. The DME 310 can receive a layout or operation specifier. Based on inputs provided to the DME 310, the DME 310 can generate data transformation and mapping information. The DME 310 can provide the data transformation and mapping information to the DMA engine 320. The DMA engine 320 can receive data that is stored in the source memory location 330. The DMA engine 320 can receive the data via the NIC (not shown). The DMA engine 320 can modify the data using the data transformation and mapping information. For example, using the data transformation and mapping information, the DMA engine 320 can modify the data by transforming and/or remapping and/or transposing the data from the source memory location 330. In one example, the data transformation and mapping information can be a transposition that is to be applied to data read from the source memory location 330, and the transposition can be represented by Y[...] STREAM. After the data transformation and mapping information is applied to the data at the DMA engine 320, the data can be transformed to manipulated data. The DMA engine 320 can initiate, via the NIC, the manipulated data to be written in the target memory location 340. Therefore, the DMA engine 320 can function to manipulate the data using the data transformation and mapping information received from the DME 310, and the DMA engine 320 can provide the manipulated data for storage in the target memory location 340.

In one configuration, a DME integrated with a DMA controller can enable DMA operations from a requestor computing node, but involves no interaction from other computing nodes (other than a computing node's NIC). As an example, a second core (or processor) in a first computing node can make a data request to gather data in memory ranges A and B, and then perform data manipulations using the data gathered in memory ranges A and B. Memory range A can be included in the first computing node, and memory range B can be included in a second computing node. The data request can also involve writing manipulated data (taken from the first and second computing nodes) to a memory range C in a third computing node. In this example, the data request can be performed with minimal to no intervention from the first and second computing nodes (other than for respective NICs in the first and second computing nodes). The data request does not involve utilizing respective cores (or processors) in the first and second computing nodes.

In general, operations on distributed but in-memory data have become increasingly common in recent years due to the larger scale of data intensive tasks and the growing appeal of in-memory distributed computing approaches. Previous solutions for accelerating data movements apply in memory-to-memory or memory-to-device operations. When applied to non-local data, these kinds of operations are performed in multiple distinct steps by software or by a local DMA controller. These steps can involve: reading data (or receiving data over a fabric), operating on read data or received data, producing results or new layouts into a temporary buffer, and then sending that buffer over the fabric to an intended destination. The fabric can be a hardware fabric that connects to multiple components in the network. The fabric can be an interconnect mechanism that is formed using mesh connections, by a central switching mechanism, a ring, a bus, or other topology. In contrast, the present technology can eliminate the need to treat local and remote sources as sinks in order to perform smart data operations without burdening the cores (or processors) and caches.

In general, increased levels of machine learning have become more common in recent years, and multiple teraflops from a single computing node can be insufficient to quickly train deep neural networks. Scale out machine learning using deep neural networks can require the ability to use vector instructions at peak efficiency on layers (e.g., weights and biases) that stretch between computing nodes. In particular, this can involve the ability to reduce CPU stalls during propagation steps in which 2- or higher- dimensional arrays are traversed in different orders. Therefore, in the present technology, smart DMA can be used to perform such reorganizations to make them fit desired traversal patterns. In addition, sparse neural networks and narrow precisions are gaining in popularity, and these operations can also benefit from zero compactions, sparse to dense conversions, etc., which can be offered by smart DMA.

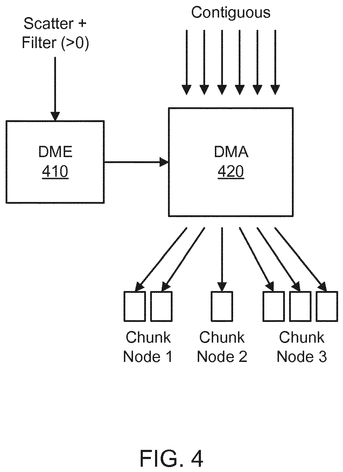

FIG. 4 illustrates an example of a scatter and filter operation performed using a DME 410 coupled to a DMA engine 420, included in a first computing node. The DME 410 can receive the scatter with filter operation, in which values greater than zero can be kept, and values less than zero can be discarded. The DME 410 can provide data transformation and mapping information for the scatter with filter operation to the DMA engine 420. The data transformation and mapping information can allow for in-the-flow transforms and remappings of data when being direct memory-accessed between source and target memory location s. The data transformation and mapping information can be used for data layout transformations, mask generation, mask application, stream splitting and blending, etc., including combinations thereof. In one example, when data is continuously being provided to the DMA engine 420, the DMA engine 420 can perform a filtering operation on the data using the data transformation and mapping information, which can produce manipulated data. The DMA engine 420 can scatter the manipulated data in chunks to various computing nodes, such as a second computing node (Node 1), a third computing node (Node 2), and a fourth computing node (Node 3). The manipulated data can be written as chunks in the second, third and fourth computing nodes using remote DMA engines in the second, third and fourth computing nodes, respectively. In this case, the operation can be performed without interaction with the cores (or processors) in the computing nodes. In addition, with respect to an operation involving the DMA engine 420, any of the computing nodes can initiate the operation.

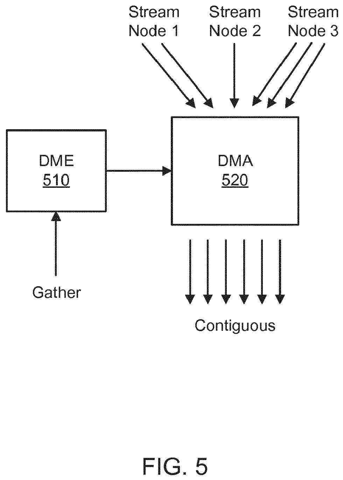

FIG. 5 illustrates an example of a gather operation performed using a DME 510 coupled to a DMA engine 520, included in a first computing node. The DME 510 can receive the gather operation and provide data transformation and mapping information for the gather operation to the DMA engine 520. Multiple streams of data can be provided to the DMA engine 520 for the gather operation. For example, a first stream of data can be provided to the DMA engine 520 from a second computing node (Node 1), a second stream of data can be provided to the DMA engine 520 from a third computing node (Node 2), and a third stream of data can be provided to the DMA engine 520 from a fourth computing node (Node 3). The DMA engine 520 can perform the gather operation on the multiple streams of data using the data transformation and mapping information, which can produce manipulated data, and which can, in some examples, be contiguously outputted by the DMA engine 520. The DMA engine 520 can write the manipulated data to local memory in the first computing node. In addition, with respect to an operation involving the DMA engine 520, any of the computing nodes can initiate the operation.

In one example, the DME integrated with the DMA engine can be utilized to perform an Array of Structures (AoS) to Structure of Arrays (SoA) conversion or vice versa, a sparse to dense conversion or vice versa, a big-endian to little-endian conversion or vice versa, a zero-compaction (in which a bit vector represents which values are zero, and the zero values are removed), projection, splitting or copying or blending of multiple data streams or data forwarding to cache memory or outer memory tiers.

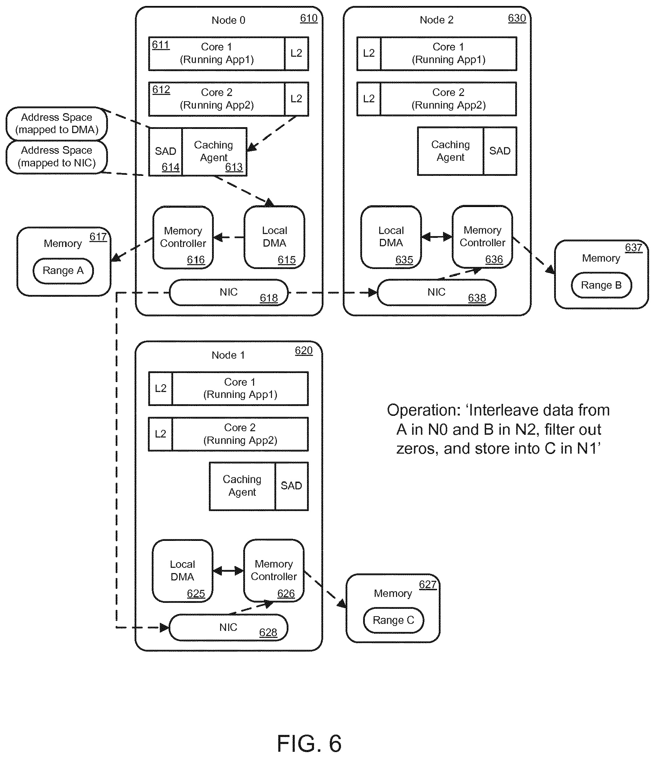

FIG. 6 illustrates an example of an operation being performed across multiple computing nodes. The multiple computing nodes can include a first computing node 610 (Node 0), a second computing node 620 (Node 1) and a third computing node 630 (Node 2). The first computing node 610 can include a first core 611 (Core 1) that runs a first application (App1), and a second core 612 (Core 2) that runs a second application (App2). The first and second cores 611,612 can also be referred to as first and second processors. The first core 611 and the second core 612 can each include a level 2 (L2) cache. The first computing node 610 can include a caching agent 613. The caching agent 613 can be a coherency agent that processes data requests from the first and second cores 611, 612 in the computing node 610. The caching agent 613 can communicate with a SAD 614, which can maintain a shared address space mapping for the multiple computing nodes. The first computing node 610 can include a first DMA engine (or local DMA 615) integrated with a DME, and the DMA engine (or local DMA 615) can be in communication with a first memory controller 616. The first computing node 610 can include a first NIC 618, which can enable the first computing node 610 to communicate with other computing nodes, such as the second and third computing nodes 620, 630. In addition, the first computing node 610 can include memory 617. The first computing node can also include a memory device with a first memory address range (Range A).

Similarly, the second computing node 620 and the third computing node 630 can each include a first and second core, a caching agent, and a SAD. The second computing node 620 can include a second DMA engine (or local DMA 625) integrated with a DME, a second memory controller 626, and a second NIC 628. The second computing node 620 can also include memory 627 with a second memory address range (Range C). The third computing node 630 can include a third DMA engine (or local DMA 635) integrated with a DME, a third memory controller 636, and a third NIC 638. The third computing node 630 can include memory 637 with a third memory address range (Range B).

In one example configuration, the second core 612 in the first computing node 610 can determine to perform an operation on data stored in memory ranges A and B, and then store results in memory range C. As previously described, memory range A can be included in the first computing node 610, memory range B can be included in the third computing node 630, and memory range C can be included in the second computing node 620. In this non-limiting example, the operation can involve interleaving data from memory ranges A and B, filtering out zero values from the interleaved data, and then storing the result in memory range C. In other words, the operation to be performed can be an interleave and filter operation.

In one example, the second core 612 in the first computing node 610 can send a data request for the operation using memory-mapped I/O (MIMO) to the caching agent 613 in the first computing node 610. According to the range of memory addresses to be accessed for the operation, the SAD 614 associated with the caching agent 613 in the first computing node 610 can determine that the data request is to be forwarded to a first NIC 618 in the first computing node 610. The first NIC 618 in the first computing node 610 can utilize the SAD 614 to identify the computing nodes that map to the address ranges to be utilized for the operation. Accordingly, the first NIC 618 can determine that memory range B is in the third computing node 630 and that memory range C is in the second computing node 620. In addition, the first NIC 618 can determine that memory range A is locally included in the first computing node 610.

In one example, the first DMA engine (or local DMA 615) in the first computing node 610 can read data stored in memory range A within the first computing node 610. The first DMA engine (or local DMA 615) can read data in memory range A using the first memory controller 616 in the first computing node 610. In addition, the first DMA engine (or local DMA 615) in the first computing node 610 (node 0) can send an instruction that causes data stored in memory range B in the third computing node 630 to be read and provided to the first DMA engine (or local DMA 615) in the first computing node 610. More specifically, the first computing node 610 can send an instruction to the first NIC 618 in the first computing node 610, and the first NIC 618 in the first computing node 610 can forward the instruction to the third NIC 638 in the third computing node 630. Based on the instruction, the third NIC 638 can instruct a third DMA engine (or local DMA 635) in the third computing node 630 to read data from memory range B. In other words, the first computing node 610 can use the instruction to initiate a remote read in the third computing node 630. The third DMA engine (or local DMA 635) in the third computing node 630 can read data from memory range B using the third memory controller 636 in the third computing node 630. The data from memory range B can be provided from the third DMA engine (or local DMA 635) in the third computing node 630 to the third NIC 638 in the third computing node 630. The third NIC 638 can provide the data from memory range B to the first NIC 618 in the first computing node 610. The data from memory range B can be provided over a fabric that connects the first computing node 610 with the third computing node 630. The fabric can be a hardware fabric that provides an interconnect mechanism to connect the first computing node 610 with the third computing node 630.

In one example, the first DMA engine (or local DMA 615) in the first computing node 610 can receive data from memory range A using the first memory controller 616, and the first DMA engine (or local DMA 615) can receive data from memory range B via the first NIC 618 and the third NIC 638 in the first and third computing nodes 610, 630, respectively. The first DMA engine (or local DMA 615) can perform the interleave and filter operation on the data from memory ranges A and B. More specifically, the first DMA engine (or local DMA 615) can interleave data from memory range A and data from memory range B, and then filter zero values from the interleaved data, which can result in manipulated data. In other words, the manipulated data is the interleaved and filtered data from memory ranges A and B.

In one example, the first DMA engine (or local DMA 615) can perform the interleave and filter operation to arrive at the manipulated data using data transformation and mapping information from the DME integrated with the first DMA engine (or local DMA 615). The DME may have provided the data transformation and mapping information specifically for the interleave and filter operation. The data transformation and mapping information can allow for in-the-flow transforms and remappings of data when being direct memory accessed between source and target memory location s. The data transformation and mapping information can be used for data layout transformations, mask generation, mask application, stream splitting and blending, etc. Therefore, the first DMA engine (or local DMA 615) can apply the data transformation and mapping information when performing the interleave and filter operation, thereby resulting in the manipulated data.

In one example, the first DMA engine (or local DMA 615) in the first computing node 610 can provide the manipulated data to the first NIC 618 in the first computing node 610. The first NIC 618 can provide the manipulated data to the second NIC 628 in a second computing node 620. The manipulated data can be provided as an output stream from the first NIC 618 to the second NIC 628, which can provide the manipulated data to the second DMA engine (or local DMA 625). Using the second memory controller 626 in the second computing node 620, the second DMA engine (or local DMA 625) can write the manipulated data to memory region C in the second computing node 620. As a result, the interleaved and filtered data from memory ranges A and B (i.e., the manipulated data) can be stored in memory region C.

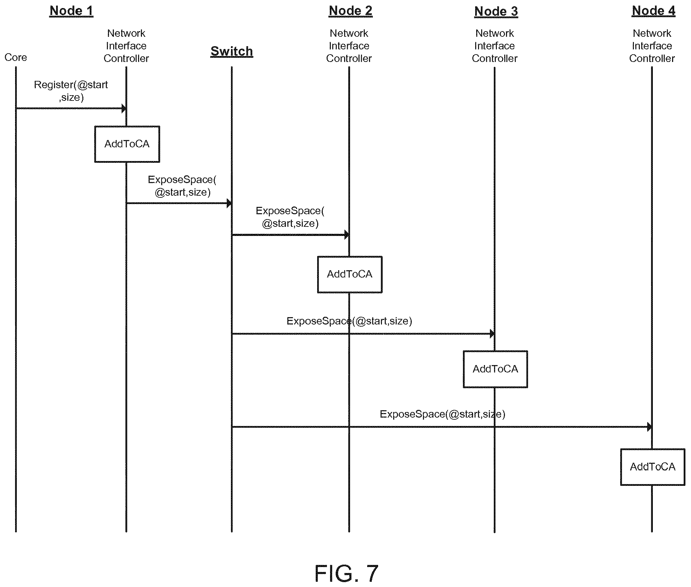

FIG. 7 illustrates exemplary messaging to register a shared address space. The shared address space can be registered at a first computing node (Node 0), a second computing node (Node 1), a third computing node (Node 2), and a fourth computing node (Node 3). For example, a core (or processor) in the first computing node can send a message register() to a NIC in the first computing node. The message register() can include various parameters, such as a start virtual address and a size of an address range to be shared. More specifically, the core (or processor) in the first computing node can send a Register(@start,size) message to the NIC in the first computing node. The NIC in the first computing node can add these parameters (e.g., the start virtual address and the size of the address range to be shared) to a caching agent in the first computing node.

In addition, the NIC in the first computing node can send a new multicast message across an entire fabric in order to expose the address space to other computing nodes. For example, the new multicast message can include the parameters (e.g., the start virtual address and the size of the address range to be shared), and each computing node can receive the multicast message and add the address space to their respective caching agents. Hence, the address space can be shared among the computing nodes. More specifically, the NIC in the first computing node can send an ExposeSpace(@start,size) message to a switch (e.g., a network switch), and the switch can forward the ExposeSpace(@start,size) message to a NIC in the second computing node, and the NIC in the second computing node can add the parameters of the ExposeSpace(@start,size) message to a caching agent in the second computing node. Similarly, the switch can forward the ExposeSpace(@start,size) message to a NIC in the third computing node, and the NIC in the third computing node can add the parameters in the ExposeSpace(@start,size) message to a caching agent in the third computing node. The switch can forward the ExposeSpace(@start,size) message to a NIC in the fourth computing node, and the NIC in the fourth computing node can add the parameters in the ExposeSpace(@start,size) message to a caching agent in the fourth computing node. Therefore, the second, third and fourth computing nodes can each add the address space received from the first computing node to their respective caching agents.

As shown in FIG. 7, the first computing node can share its address space with the other computing nodes in the fabric. Similarly, other computing nodes can share their address spaces with remaining computing nodes in the fabric. For example, the second computing node can send a Register(@start,size) message for registering a shared address space to the switch, and the switch can forward the Register(@start,size) message to each of the first, third and fourth computing nodes.

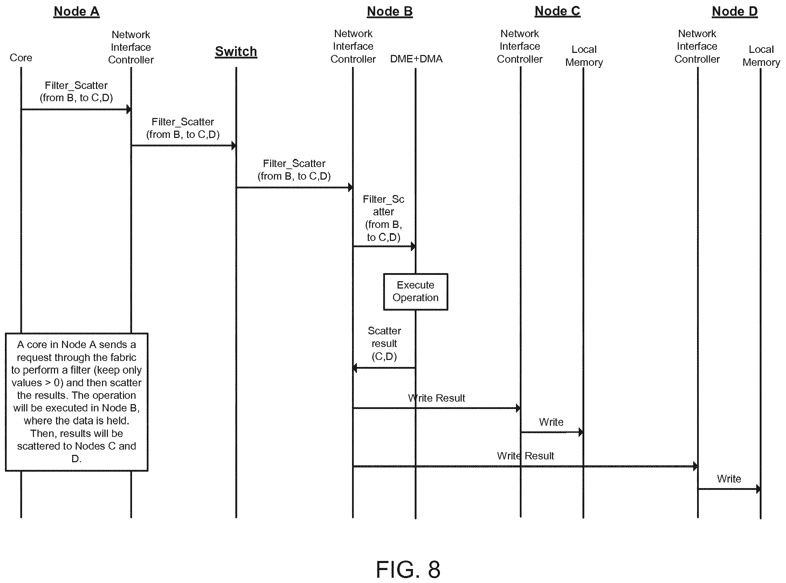

FIG. 8 illustrates exemplary messaging to perform an operation across multiple computing nodes. The multiple computing nodes can include a first computing node (Node A), a second computing node (Node B), a third computing node (Node C) and a fourth computing node (Node D). For example, a core (or processor) in the first computing node can send a data request for the operation to a NIC in the first computing node. The data request can be for performing a filter and scatter operation at the second computing node, for example. In this example, the filter and scatter operation can include filtering values in a range of data stored in the second computing node (e.g., keeping values that are greater than zero and discarding values that are less than zero), and then scattering the results in the third and fourth computing nodes. The filter and scatter operation can be executed at the second computing node, in which the data is stored.

More specifically, the core (or processor) in the first computing node can send a Filter_Scatter(from B to C, D) message to the NIC in the first computing node. The NIC in the first computing node can forward the Filter_Scatter(from B to C, D) message to a switch (e.g., a network switch), which can forward the Filter_Scatter(from B to C, D) message to the NIC in the second computing node. The NIC in the second computing node can forward the Filter_Scatter(from B to C, D) message to an integrated DME and DMA controller in the second computing node, and the integrated DME and DMA controller can execute the operation. In other words, the integrated DME and DMA controller in the second computing node can filter values in the range of data stored in the second computing node (e.g., keeping values that are greater than 0 and discarding values that are less than 0). The integrated DME and DMA controller in the second computing node can send scattered results for the third and fourth computing nodes to the NIC in the second computing node. The scattered results can be represented as Scattered_Results(C, D), and the NIC in the second computing node can initiate a write of the scattered results in the third and fourth computing nodes. For example, the NIC in the second computing node can send the scattered results to the NIC in the third computing node, and the NIC in the third computing node can initiate the scattered results to be written in a local memory in the third computing node. Similarly, the NIC in the second computing node can send the scattered results to a NIC in the fourth computing node, and the NIC in the fourth computing node can initiate the scattered results to be written in a local memory in the fourth computing node.

In the example shown in FIG. 8, a requestor computing node (e.g., the first computing node) is not involved in the operation, other than for triggering an initial data request to perform the operation. For the execution of the operation and for storing the operation results, only remote computing nodes are involved (e.g., the second, third and fourth computing nodes). In addition, other than the core (or processor) in the computing node (i.e., the first computing node) that initially requests for the operation to be performed, no other cores (or processors) are involved in the performance of the operation across the multiple computing nodes.

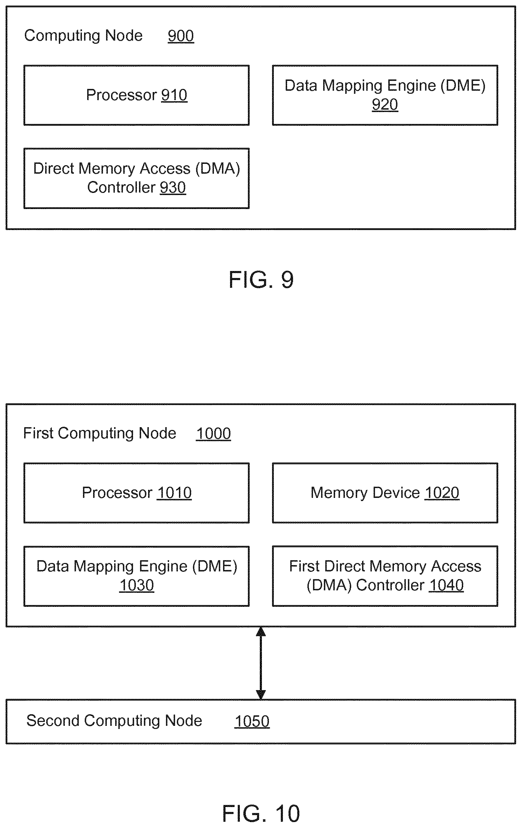

FIG. 9 illustrates an example of a computing node 900 operable to perform memory operations between multiple computing nodes. The computing node 900 can include a processor 910, and a DME 920 configured to generate data transformation and mapping information for a defined memory operation received from the processor 910. The computing node 900 can include a DMA controller 930 configured to initiate the defined memory operation between the multiple computing nodes. The defined memory operation can include any useful memory operation, such as, for example, manipulating data stored in one or more source memory locations in accordance with the data transformation, mapping information, and providing manipulated data for storage in one or more target memory locations.

FIG. 10 illustrates an example of a first computing node 1000 operable to perform memory operations with a second computing node 1050. The first computing node 1000 can include a processor 1010, and a memory device 1020. The first computing node 1000 can also include a DME 1030 operable to generate data transformation and mapping information for a defined memory operation received from the processor 1010. The first computing node 1000 can also include a first DMA controller 1040 communicatively coupled to the DME 1030. The first DMA controller 1040 can be operable to initiate the defined memory operation between the first computing node 1000 and the second computing node 1050. The defined memory operation can include any useful memory operation, including, for example, manipulating data stored in a source memory location in the memory device 1020 in accordance with the data transformation and mapping information, and sending the manipulated data to the second computing node 1050 for storage in a target memory location in the second computing node 1050.

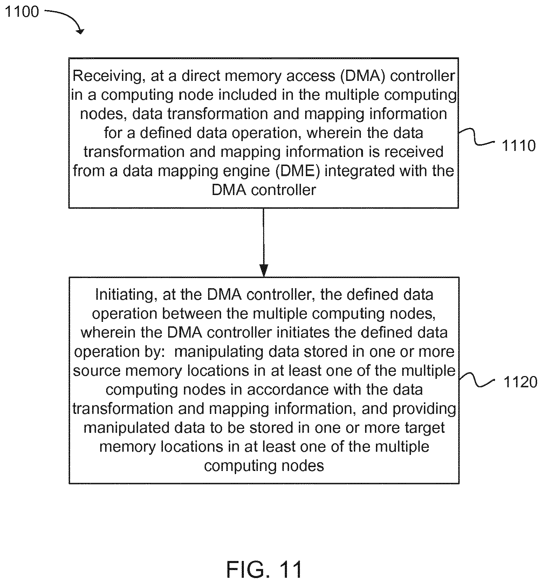

Another example provides a method 1100 for performing memory operations between multiple computing nodes, as shown in the flow chart in FIG. 11. The method can be executed as instructions on a machine, where the instructions are included on at least one computer readable medium or one non-transitory machine readable storage medium. In one example, the method can include an operation of receiving, at a DMA controller in a computing node included in the multiple computing nodes, data transformation and mapping information for a defined memory operation, wherein the data transformation and mapping information is received from a DME integrated with the DMA controller, as in block 1110. The method can include the operation of initiating, at the DMA controller, the defined memory operation between the multiple computing nodes, wherein the DMA controller initiates the defined memory operation by manipulating data stored in one or more source memory locations in at least one of the multiple computing nodes in accordance with the data transformation and mapping information, and providing manipulated data to be stored in one or more target memory locations in at least one of the multiple computing nodes, as in block 1120.

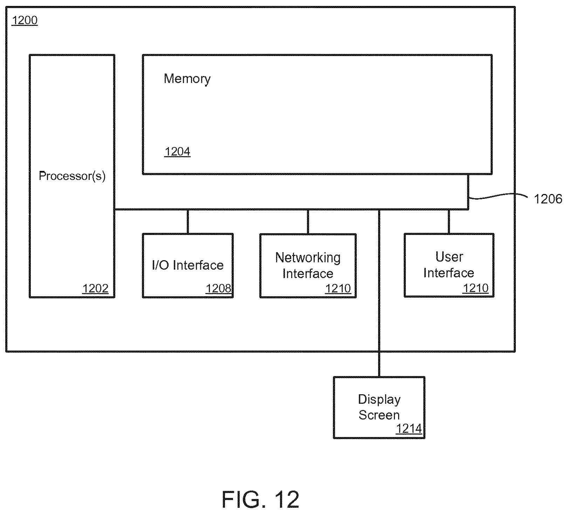

FIG. 12 illustrates a general computing system or device 1200 that can be employed in the present technology. The computing system 1200 can include a processor 1202 in communication with a memory 1204. The memory 1204 can include any device, combination of devices, circuitry, and the like that is capable of storing, accessing, organizing, and/or retrieving data. Non-limiting examples include SANs (Storage Area Network), cloud storage networks, volatile memory or NVM, optical media, hard-drive type media, and the like, including combinations thereof.

Non-limiting examples of volatile memory can include any combination of random access memory (RAM), such as static random access memory (SRAM), dynamic random access memory (DRAM), synchronous dynamic random access memory (SDRAM), and the like. In some examples, DRAM complies with a standard promulgated by JEDEC, such as JESD79F for Double Data Rate (DDR) SDRAM, JESD79-2F for DDR2 SDRAM, JESD79-3F for DDR3 SDRAM, or JESD79-4A for DDR4 SDRAM (these standards are available at www.jedec.org).

Nonlimiting examples of NVM can include any or a combination of solid state memory (such as planar or three-dimensional (3D) NAND flash memory, NOR flash memory, or the like), including solid state drives (SSD), cross point array memory, including 3D cross point memory, phase change memory (PCM), such as chalcogenide PCM, non-volatile dual in-line memory module (NVDIMM), a network attached storage, byte addressable nonvolatile memory, ferroelectric memory, silicon-oxide-nitride-oxide-silicon (SONOS) memory, polymer memory (e.g., ferroelectric polymer memory), ferroelectric transistor random access memory (Fe-TRAM) ovonic memory, spin transfer torque (STT) memory, nanowire memory, electrically erasable programmable read-only memory (EEPROM), magnetic storage memory, hard disk drive (HDD) memory, a redundant array of independent disks (RAID) volume, a, write in place non-volatile MRAM (NVMRAM), and the like. In some examples, non-volatile memory can comply with one or more standards promulgated by the Joint Electron Device Engineering Council (JEDEC), such as JESD218, JESD219, JESD220-1, JESD223B, JESD223-1, or other suitable standard (the JEDEC standards cited herein are available at www.jedec.org).

The computing system or device 1200 additionally includes a local communication interface 1206 for connectivity between the various components of the system. For example, the local communication interface 1206 can be a local data bus and/or any related address or control busses as may be desired.

The computing system or device 1200 can also include an I/O interface 1208 for controlling the I/O functions of the system, as well as for I/O connectivity to devices outside of the computing system 1200. A network interface 1210 can also be included for network connectivity. The network interface 1210 can control network communications both within the system and outside of the system. The network interface can include a wired interface, a wireless interface, a Bluetooth interface, optical interface, and the like, including appropriate combinations thereof. Furthermore, the computing system 1200 can additionally include a user interface 1212, a display device 1214, as well as various other components that would be beneficial for such a system.

The processor 1202 can be a single or multiple processors, and the memory 1204 can be a single or multiple memories. The local communication interface 1206 can be used as a pathway to facilitate communication between any of a single processor, multiple processors, a single memory, multiple memories, the various interfaces, and the like, in any useful combination.

Various techniques, or certain aspects or portions thereof, can take the form of program code (i.e., instructions) embodied in tangible media, such as floppy diskettes, CD-ROMs, hard drives, non-transitory computer readable storage medium, or any other machine-readable storage medium wherein, when the program code is loaded into and executed by a machine, such as a computer, the machine becomes an apparatus for practicing the various techniques. Circuitry can include hardware, firmware, program code, executable code, computer instructions, and/or software. A non-transitory computer readable storage medium can be a computer readable storage medium that does not include signal. In the case of program code execution on programmable computers, the computing device can include a processor, a storage medium readable by the processor (including volatile and non-volatile memory and/or storage elements), at least one input device, and at least one output device. The volatile and non-volatile memory and/or storage elements can be a RAM, EPROM, flash drive, optical drive, magnetic hard drive, solid state drive, or other medium for storing electronic data.

One or more programs that can implement or utilize the various techniques described herein can use an application programming interface (API), reusable controls, and the like. Such programs can be implemented in a high level procedural or object oriented programming language to communicate with a computer system. However, the program(s) can be implemented in assembly or machine language, if desired. In any case, the language can be a compiled or interpreted language, and combined with hardware implementations. Exemplary systems or devices can include without limitation, laptop computers, tablet computers, desktop computers, smart phones, computer terminals and servers, storage databases, and other electronic devices.

### Examples

The following examples pertain to specific invention embodiments and point out specific features, elements, or steps that can be used or otherwise combined in achieving such embodiments.

In one example there is provided a computing node operable to perform data operations between multiple computing nodes, the computing node comprising:
a processor;
a data mapping engine (DME) configured to generate data transformation and mapping information for a defined data operation received from the processor; and
a direct memory access (DMA) controller configured to initiate the defined data operation between the multiple computing nodes, wherein the defined data operation includes: manipulating data stored in one or more source memory locations in accordance with the data transformation and mapping information, and providing manipulated data for storage in one or more target memory locations.

In one example of a computing node, the DMA controller is configured to send the manipulated data to one or more remote DMA controllers in one or more remote computing nodes for storage of the manipulated data in the one or more target memory locations in the one or more remote computing nodes.

In one example of a computing node, the DMA controller in the computing node is configured to send the manipulated data to one or more remote DMA controllers in one or more remote computing nodes over a fabric via a network interface controller included in the computing node.

In one example of a computing node, the computing node further comprises a caching agent that includes a system address decoder (SAD), wherein the SAD maintains a map of shared address space that maps the one or more source memory locations and the one or more target memory locations to corresponding computing nodes.

In one example of a computing node, the DME is operable to generate the data transformation and mapping information for at least one of: data layout transformations, data transpositions, mask generations, mask applications, or data stream splitting and blending.

In one example of a computing node, the computing node further comprises a memory device that includes the one or more source memory locations or the one or more target memory locations.

In one example of a computing node, the one or more source memory locations and the one or more target memory locations are included in the multiple computing nodes.

In one example of a computing node, the DMA controller is configured to initiate the defined data operation without participation of the processor in the computing node.

In one example of a computing node, the defined data operation includes:
a scatter and filter operation that is performed between the one or more source memory locations and the one or more target memory locations; or
a gather operation that is performed between the one or more source memory locations and the one or more target memory locations.

In one example there is provided a first computing node operable to perform data operations with a second computing node, the first computing node comprising:
a processor;
a memory device;
a data mapping engine (DME) operable to generate data transformation and mapping information for a defined data operation received from the processor; and
a first direct memory access (DMA) controller communicatively coupled to the DME, the first DMA controller being operable to initiate the defined data operation between the first computing node and the second computing node, wherein the defined data operation includes: manipulating data stored in a source memory location in the memory device in accordance with the data transformation and mapping information, and sending the manipulated data to the second computing node for storage in a target memory location in the second computing node.

In one example of a first computing node, the first computing node further comprises a first network interface controller that receives the manipulated data from the first DMA controller, and the first network interface controller communicates the manipulated data to a second network interface controller in the second computing node, and the manipulated data is provided from the second network interface controller to a second DMA controller in the second computing device to enable storage of the manipulated data in the target memory location of the second computing node.

In one example of a first computing node, the first computing node further comprises a caching agent that includes a system address decoder (SAD), wherein the SAD maintains a map of shared address space that maps the source memory location to the first computing node and the target memory location to the second computing node, and the SAD enables the first DMA controller to initiate the defined data operation between the first computing node and the second computing node.

In one example of a first computing node, the DME is operable to generate the data transformation and mapping information for at least one of: data layout transformations, data transpositions, mask generations, mask applications, or data stream splitting and blending.

In one example of a first computing node, the first DMA controller is configured to initiate the defined data operation without participation of the processor in the first computing node.

In one example of a first computing node, the DME is operable to perform one or more of the following data operations: an Array of Structures (AoS) to Structure of Arrays (SoA) conversion or vice versa, a sparse to dense conversion or vice versa, a big-endian to little-endian conversion or vice versa, a zero-compaction in which zero values are removed, projection, splitting or copying or blending of multiple data streams or data forwarding to cache memory or outer memory tiers.

In one example there is provided a method for performing data operations between multiple computing nodes, the method comprising:
receiving, at a direct memory access (DMA) controller in a computing node included in the multiple computing nodes, data transformation and mapping information for a defined data operation, wherein the data transformation and mapping information is received from a data mapping engine (DME) integrated with the DMA controller; and
initiating, at the DMA controller, the defined data operation between the multiple computing nodes, wherein the DMA controller initiates the defined data operation by: manipulating data stored in one or more source memory locations in at least one of the multiple computing nodes in accordance with the data transformation and mapping information, and providing manipulated data to be stored in one or more target memory locations in at least one of the multiple computing nodes.

In one example of a method for performing data operations between multiple computing nodes, the method further comprises sending the manipulated data from the DMA controller to one or more remote DMA controllers in one or more remote computing nodes for storage of the manipulated data in the one or more target memory locations in the one or more remote computing nodes.

In one example of a method for performing data operations between multiple computing nodes, the method further comprises sending the manipulated data from the DMA controller to one or more remote DMA controllers in one or more remote computing nodes over a fabric via a network interface controller included in the computing node.

In one example of a method for performing data operations between multiple computing nodes, the data transformation and mapping information is generated at the DME for at least one of: data layout transformations, data transpositions, mask generations, mask applications, or data stream splitting and blending.

In one example of a method for performing data operations between multiple computing nodes, the method further comprises initiating the defined data operation at the DMA controller without participation of a processor in the computing node.

In one example of a method for performing data operations between multiple computing nodes, the defined memory operation includes:
a scatter and filter operation that is performed between the one or more source memory locations and the one or more target memory locations; or
a gather operation that is performed between the one or more source memory locations and the one or more target memory locations.

In one example there is provided a system of networked computing nodes, the system comprising:
a first computing node that includes: a memory device, a data mapping engine (DME) and a first direct memory access (DMA) controller; and
a second computing node that includes a second DMA controller,
wherein the DME in the first computing node is configured to generate transformation and mapping information for a defined data operation, and the first DMA controller in the first computing node is configured to initiate the defined data operation between the first computing node and the second computing node, wherein the defined data operation includes: manipulating data stored in a source memory location in the memory device in accordance with the data transformation and mapping information, and sending the manipulated data to the second computing node for storage in a target memory location in the second computing node.

In one example of a system of networked computing nodes, the first computing node further comprises a caching agent that includes a system address decoder (SAD), wherein the SAD maintains a map of shared address space that maps the source memory location to the first computing node and the target memory location to the second computing node, and the SAD enables the first DMA controller to initiate the defined data operation between the first computing node and the second computing node.

In one example of a system of networked computing nodes, the DME is operable to generate the data transformation and mapping information for at least one of: data layout transformations, data transpositions, mask generations, mask applications, or data stream splitting and blending.

While the forgoing examples are illustrative of the principles of invention embodiments in one or more particular applications, it will be apparent to those of ordinary skill in the art that numerous modifications in form, usage and details of implementation can be made without the exercise of inventive faculty, and without departing from the principles and concepts of the disclosure.

## Claims

1. A computing node operable to perform data operations between multiple computing nodes, the computing node comprising:
a processor;
a data mapping engine (DME) configured to generate data transformation and mapping information for a defined data operation received from the processor; and
a direct memory access (DMA) controller configured to initiate the defined data operation between the multiple computing nodes without participation of the processor in the computing node, wherein the defined data operation includes:
manipulating data stored in one or more source memory locations in accordance with the data transformation and mapping information, and providing manipulated data for storage in one or more target memory locations.

2. The computing node of claim 1, wherein the DMA controller is configured to send the manipulated data, over a fabric via a network interface controller included in the computing node, to one or more remote DMA controllers in one or more remote computing nodes for storage of the manipulated data in the one or more target memory locations in the one or more remote computing nodes.

3. The computing node of claim 1, further comprising a caching agent that includes a system address decoder (SAD), wherein the SAD maintains a map of shared address space that maps the one or more source memory locations and the one or more target memory locations to corresponding computing nodes.

4. The computing node of claim 1, wherein the DME is operable to generate the data transformation and mapping information for at least one of: data layout transformations, data transpositions, mask generations, mask applications, or data stream splitting and blending.

5. The computing node of claim 1, further comprising a memory that includes the one or more source memory locations or the one or more target memory locations, and wherein the one or more source memory locations and the one or more target memory locations are included in the multiple computing nodes.

6. The computing node of claim 1, wherein the defined data operation includes:
a scatter and filter operation that is performed between the one or more source memory locations and the one or more target memory locations; or
a gather operation that is performed between the one or more source memory locations and the one or more target memory locations.

7. A system of networked computing nodes, the system comprising:
a first computing node that includes:
a memory device, a data mapping engine (DME), and a first direct memory access (DMA) controller; and
a second computing node that includes a second DMA controller,
wherein the DME in the first computing node is configured to generate transformation and mapping information for a defined data operation, and the first DMA controller in the first computing node is configured to initiate the defined data operation between the first computing node and the second computing node, wherein the defined data operation includes:
manipulating data stored in a source memory location in the memory device in accordance with the data transformation and mapping information, and sending the manipulated data to the second computing node for storage in a target memory location in the second computing node.

8. The system of claim 7, further comprising:
a first network interface controller in the first computing node that receives the manipulated data from the first DMA controller;
a second network interface controller in the second computing node;
wherein the first network interface controller communicates the manipulated data to the second network interface controller, and the manipulated data is provided from the second network interface controller to the second DMA controller to enable storage of the manipulated data in the target memory location of the second computing node.

9. The system of claim 7, wherein the first computing node further comprises a caching agent that includes a system address decoder (SAD), wherein the SAD maintains a map of shared address space that maps the source memory location to the first computing node and the target memory location to the second computing node, and the SAD enables the first DMA controller to initiate the defined data operation between the first computing node and the second computing node.

10. The system of claim 7, wherein the DME is operable to generate the data transformation and mapping information for at least one of: data layout transformations, data transpositions, mask generations, mask applications, or data stream splitting and blending.

11. The system of claim 7, wherein the DME is operable to perform one or more of the following data operations: an Array of Structures (AoS) to Structure of Arrays (SoA) conversion or vice versa, a sparse to dense conversion or vice versa, a big-endian to little-endian conversion or vice versa, a zero-compaction in which zero values are removed, projection, splitting or copying or blending of multiple data streams or data forwarding to cache memory or outer memory tiers.

12. A method for performing data operations between multiple computing nodes, the method comprising:
receiving, at a direct memory access (DMA) controller in a computing node included in the multiple computing nodes, data transformation and mapping information for a defined data operation, wherein the data transformation and mapping information is received from a data mapping engine (DME) integrated with the DMA controller; and
initiating, at the DMA controller, the defined data operation between the multiple computing nodes, wherein the DMA controller initiates the defined data operation by: manipulating data stored in one or more source memory locations in at least one of the multiple computing nodes in accordance with the data transformation and mapping information, and providing manipulated data to be stored in one or more target memory locations in at least one of the multiple computing nodes.

13. The method of claim 12, further comprising sending the manipulated data, over a fabric via a network interface controller included in the computing node, from the DMA controller to one or more remote DMA controllers in one or more remote computing nodes for storage of the manipulated data in the one or more target memory locations in the one or more remote computing nodes.

14. The method of claim 12, wherein the data transformation and mapping information is generated at the DME for at least one of: data layout transformations, data transpositions, mask generations, mask applications, or data stream splitting and blending.

15. The method of claim 12, wherein the defined data operation includes:
a scatter and filter operation that is performed between the one or more source memory locations and the one or more target memory locations; or
a gather operation that is performed between the one or more source memory locations and the one or more target memory locations.
